# EUROPÄISCHE PATENTSCHRIFT

(11) **EP 3 932 157 B1**
(45) Veröffentlichungstag und Bekanntmachung des Hinweises auf die Patenterteilung: **06.12.2023**
(21) Anmeldenummer: 21183352.0
(22) Anmeldetag: 02.07.2021
(51) Int. Cl.: A01B 3/46, A01D 78/10, A01B 59/06, A01B 73/00

(54) **LANDWIRTSCHAFTLICHES ANBAUGERÄT**
AGRICULTURAL IMPLEMENT
OUTIL AGRICOLE

(30) Priorität: 02.07.2020 DE 102020117433
(43) Veröffentlichungstag der Anmeldung: 05.01.2022
(73) Patentinhaber: Pöttinger Landtechnik GmbH, 4710 Grieskirchen (AT)
(72) Erfinder: BALDINGER, Friedrich, 4710 Grieskirchen (AT); Hehenberger, Martin, 4710 Grieskirchen (AT); Hehenberger, Robert, 4710 Grieskirchen (AT); Meindlhumer, Wilhelm, 4710 Grieskirchen (AT); Preimeß, Hans-Jörg, 4710 Grieskirchen (AT)
(74) Vertreter: Thoma, Michael

(56) Entgegenhaltungen:
- EP-A2- 2 033 504
- CN-A- 105 592 685
- DE-B4-102018 003 099
- US-A- 4 326 593

## Beschreibung

Die vorliegende Erfindung betrifft ein landwirtschaftliches Anbaugerät in Form eines Anbaupflugs, mit einem Anbaubock, der mit einem zumindest ein Arbeitsgerät tragenden Maschinenrahmen verbunden ist und Unter- und Oberlenkeranbaupunkte zum Dreipunktanbau an einen Schlepper umfasst, wobei die Unterlenkeranbaupunkte am Anbaubockkorpus um eine aufrechte Lenkachse zum Einlenken des Anbaubocks im Arbeitsbetrieb schwenkbar gelagert sind, wobei eine Zentrier- und/oder feststellvorrichtung zum Zentrieren und/oder Feststellen der Unterlenkeranbaupunkte bezüglich der Lenkachse im Transport- und/oder Vorgewendebetrieb vorgesehen ist.

Solche landwirtschaftlichen Anbaugeräte werden üblicherweise durch Verstellen der Unter- und/oder Oberlenker des Schleppers für den Straßentransport und/oder das Vorgewende angehoben und für den Arbeitsbetrieb abgesenkt, sodass die Arbeitsaggregate beispielsweise in Form der Pflugschare mit dem zu bearbeitenden Gut in Eingriff gelangen bzw. für den Transport und das Vorgewende einen ausreichenden Bodenabstand gewinnen.

Dabei ist es im abgesenkten Arbeitsbetrieb hilfreich, wenn das Anbaugerät gegenüber dem Schlepper zumindest ein Stück weit einlenken kann und das Schlepper-Anbaugeräte-System eine gewisse Beweglichkeit hat, wenn das Gespann im Arbeitsbetrieb Hindernisse umfahren muss. Dies wird gerne in Gebieten verwendet, in denen wiederkehrende Hindernisse wie Masten, große Steine oder Bäume umfahren werden müssen. Besitzt das Gespann die genannte Beweglichkeit, muss das Anbaugerät beim Umfahren der Hindernisse nicht ausgehoben werden, sodass beispielsweise im Falle eines Pflugs der Boden auch beim Umfahren des Hindernisses weiterbearbeitet werden kann, während andererseits es zu keinen Verspannungen zwischen dem Schlepper und dem Anbaugerät kommt, da das Anbaugerät beim Umfahren des Hindernisses ein Stück weit einlenken kann. Mit anderen Worten wird das Schlepper-Anbaugeräte-Gespann in Arbeitsposition am Feld für eine gewisse Schwenk- bzw. Lenkbewegung freigegeben.

Für den Straßentransport oder auch im Vorgewende ist eine solche Einlenkbarkeit und Beweglichkeit jedoch unerwünscht, da der schwere Maschinenrahmen mit den daran aufgehängten Arbeitsaggregaten unkontrolliert hin- und herschlagen könnte. Um diese ungewollte Instabilität in der angehobenen Vorgewende- und/oder Transportstellung zu vermeiden, ist es bekannt die Einlenkbarkeit zu sperren und das Gerät zu zentrieren, sodass es nicht in einer zu einer Seite zu weit überstehenden Position eingefroren wird, die beispielsweise die zulässige Straßenspurbreite missachten würde. Hierzu muss die zentrierte Mittelstellung nicht exakt den zur Verfügung stehenden Einlenkbereich hälftig teilen, was gleichwohl der Fall sein kann, sondern es kann ausreichend sein, den einlenkbaren Maschinenteil des Anbaugeräts soweit zu zentrieren, dass die Spur des Schleppers zumindest einigermaßen eingehalten wird.

Solche Anbaugeräte, die im Arbeitsbetrieb ein Einlenken des die Arbeitsaggregate tragenden Rahmens bzw. die genannte Beweglichkeit des Gespanns ermöglichen, andererseits aber den einlenkbaren Maschinenteil in der angehobenen Vorgewende- bzw. Transportstellung zentrieren, sind in verschiedener Ausprägung bekannt.

Beispielsweise zeigt die DE 10 2006 023 179 A1 eine Anbauvorrichtung für eine Landmaschine, bei der der die Arbeitsaggregate tragende, zentrale Maschinenrahmen gegenüber dem Anbaubock einlenkbar ist. Um den Maschinenrahmen gegenüber dem Anbaubock beim Ausheben zu zentrieren, werden Zentrierstreben verwendet, die gelenkig an den Unterlenkeranbaupunkten angelenkt sind, welche selbst beim Ausheben verfahren und hierdurch die Zentrierstreben betätigen. Andere Anbaugeräte, bei denen ebenfalls der zentrale Maschinenrahmen gegenüber dem Anbaubock einlenkbar ist und durch Einfahren des Oberlenkeranlenkpunkts in eine herzförmige Zentrierkontur in eine zentrierte Mittelstellung verbracht werden kann, wenn das Gerät in die Vorgewende- bzw. Transportstellung angehoben wird, zeigen die Schriften DE 690 08 309 T2, DE 36 01 354 A1 oder DE 10 2004 025 478 A1.

Aus der Schrift DE 10 2018 115 836 A1 ist ferner ein Wendepflug bekannt, bei dem der die Pflugschare tragende Wenderahmen in der Transportstellung durch ein Transportrad abgestützt und gegenüber dem Anbaubock um eine liegende Achse auf- und niederwippen kann. Die für die Transportstellung genutzte Wippachse wird dabei von der Vorfurchen-Schwenkachse gebildet. Da diese Vorfurchenachse in der Betriebsstellung des Pflugs an sich aufrecht steht, wird der Pflug für den Transport sozusagen halb gewendet bzw. um die Wendeachse nur halb verschwenkt, sodass die Vorfurchenachse eine liegende Stellung einnimmt, vgl. auch EP 20 33 504 A2. Dieser Beweglichkeitsmechanismus gestattet jedoch nicht die zuvor genannte Beweglichkeit des Schlepper-Anbaugeräte-Gespanns in der abgesenkten Arbeitsstellung, die ein Einlenken des Anbaugeräts gegenüber dem Schlepper gestattet.

Die vorgenannte Gelenkigkeit des Maschinenrahmens gegenüber dem Anbaubock erfordert jedoch eine massive Ausbildung des Lenkachsen-Gelenks zwischen Maschinenrahmen und Anbaubock, um die hohen Kräfte übertragen und dauerhaft, stabil abfangen zu können. Zudem bauen die verwendeten Zentrierlenker sperrig. Werden diese weggelassen und über eine herz- oder dreieckförmige Zentrierkontur zentriert, wirken dort sehr hohe Zentrierkräfte.

Die Schrift DE 10 2018 003 099 B4 zeigt ferner einen Anbaubock, der mit dem Maschinenrahmen über einen Dreischlag verbunden ist, dessen untere Streben längenveränderbar ausgebildet sind. Dabei handelt es sich jedoch nicht um einen Anbaupflug, sondern um einen Zetter, dessen Querrahmenmittelteil in der genannten Weise angelenkt ist.

Insofern wurde bereits vorgeschlagen, die Gelenkigkeit für das Einlenken des Anbaugeräts gegenüber dem Schlepper in den Anbaubock zu integrieren und die Unterlenkeranlenkpunkte, die mit den Unterlenkern des Schleppers verbunden werden, gegenüber dem Anbaubock bzw. dem Anbaubockkorpus um eine aufrechte Lenkachse verschwenkbar zu lagern. Hierdurch kann sich der gesamte Anbaubock gegenüber dem Schlepper verdrehen, während der vom Anbaubock getragene Maschinenrahmen, an dem die Arbeitsaggregate aufgehängt sind, starr mit dem Anbaubock verbunden sein kann. Das Anbaugerät kann zusammen mit dem Anbaubock gegenüber dem Schlepper einlenken.

Bei solchen Anbauböcken mit integrierter Gelenkigkeit, die ein Verschwenken der Unterlenkeranlenkpunkte gegenüber dem Anbaubockchassis zulassen, kann ein Zentrieren über die Gewichtskraft des Anbaugeräts beim Ausheben bzw. die hierdurch induzierten Reaktionskräfte im Anbaubock erzielt werden. Wird der Anbaubock durch Verstellen der Ober- und Unterlenker des Schleppers angehoben, zieht der Oberlenker den Oberlenkeranlenkpunkt nach vorne, während die Unterlenker die Unterlenkeranlenkpunkte nach hinten drücken. Umgekehrt ausgedrückt, versucht das Gewicht des Anbaugeräts den Anbaubock am Oberlenkeranlenkpunkt vom Schlepper weg zu ziehen, während der untere Abschnitt des Anbaubocks zum Schlepper gedrückt wird. Dabei fahren die Unterlenkeranlenkpunkte gegen eine Zentrierkontur am Anbaubock beispielsweise in Form von Zentrieranschlägen, sodass der Anbaubock mit samt dem daran starr befestigten Maschinenrahmen und den dort aufgehängten Arbeitsaggregaten relativ zum Schlepper zentriert wird.

Allerdings reicht eine solche gewichtskraftbasierte Zentrierung des Anbaugeräts nicht aus, um das Anbaugerät tatsächlich verlässlich in der gewünschten Mittel- bzw. Zentrierstellung zu halten. Insbesondere Anbaugeräte mit großer Arbeitsbreite wie beispielsweise ein vielschariger Pflug entwickeln bei schnellen Kurvenfahrten, holprigem Gelände oder schrägen Hangfahrten hohe Auslenkkräfte, die das Anbaugerät gegenüber dem Schlepper ausschwenken lassen, auch wenn es in der angehobenen Transport- bzw. Vorgewendestellung ist.

Um solche ungewollten, gefährlichen Auslenkbewegungen in der angehobenen Transportstellung zu verhindern, wurde bereits vorgeschlagen, die verstell- bzw. verschwenkbaren Unterlenkeranlenkpunkte am Anbaubockchassis zu fixieren bzw. zu blockieren, sodass Schwenkbewegungen nicht mehr möglich sind. Eine solche Fixierung kann in an sich bekannter Weise durch das Einstecken von Sperrbolzen erzielt werden, die die Beweglichkeit der Unterlenkeranlenkpunkte blockieren.

Eine solche Fixiervorrichtung ist jedoch nicht nur mühsam zu bedienen, da die Bolzen üblicherweise nur einsteckbar sind, wenn das Arbeitsgerät in der vorgesehenen Zentrierstellung ist und üblicherweise ein Absteigen vom Schlepper erfordert, sondern birgt auch die Gefahr, vergessen zu werden. Selbst wenn die Fixiervorrichtung mittels eines Aktors vom Schlepperführerstand betätigt werden kann, kommt es vor, dass der Schlepperführer die Betätigung der Fixierung vergisst, wenn das Gespann das Feld verlässt und der Straßentransport beginnt. Zudem betätigen Schlepperführer den Mechanismus oft willentlich nicht, wenn nur im Vorgewende die Arbeitsmaschine ausgehoben wird oder eine kürzere, schräge Hangfahrt auf dem Feld zu absolvieren ist, sodass zumindest bei diesen Betriebssituationen keine verlässliche Fixierung in der Zentrierstellung gegeben ist.

Hiervon abgesehen neigen die genannten Fixiersysteme auch dazu, in der Fixierstellung nicht spielfrei zu sein und entsprechende kleinere Auslenkbewegungen zuzulassen, da ein gewisses Spiel hilfreich ist, die Fixierbolzen einstecken zu können.

Hiervon ausgehend liegt der vorliegenden Erfindung die Aufgabe zugrunde, ein verbessertes landwirtschaftliches Anbaugerät der genannten Art zu schaffen, das Nachteile des Standes der Technik vermeidet und letzteren in vorteilhafter Weise weiterbildet. Insbesondere soll eine einfach und verläßlich zu bedienende, möglichst spielfreie Fixierung des Anbaugeräts in der Mittel- bzw. Zentrierstellung für den ausgehobenen Transport- und/oder Vorgewendebetrieb erreicht werden.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, die Unterlenkeranlenkpunkte aktiv gegen eine Zentrierkontur zu fahren, wenn der Anbaubock vom Schlepper in die Transport- bzw. Vorgewendestellung angehoben wird, um das landwirtschaftliche Anbaugerät auch bei ungünstigen Transportbedingungen wie schnellen Kurvenfahrten oder schrägen Hangquerungen stabil und spielfrei in der Zentrierstellung zu halten. Erfindungsgemäß besitzt die Zentrier- und/oder Feststellvorrichtung einen Aktor zum Verstellen der Unterlenkeranlenkpunkte gegen eine Zentrierkontur des Anbaubocks und ist automatisch arbeitend in Abhängigkeit des Aushebens des Anbaubocks in die Transport- und/oder Vorgewendestellung ausgebildet derart, dass die Unterlenkeranlenkpunkte beim Anheben gegen die Zentrierkontur fahren und im abgesenkten Arbeitsbetrieb freigegeben sind. Durch das automatische Verstellen der Unterlenkeranlenkpunkte in Abhängigkeit des Anhebens des Anbaubocks wird die Gefahr von Fehlbedienungen vermieden und gleichzeitig ein hoher Bedienkomfort erreicht. Zudem wird gegenüber nur gewichtskraftzentrierten Systemen ein verlässliches und spielfreies Halten des Anbaugeräts in der Zentrierstellung auch unter schwierigen Fahrbedingungen erreicht.

Um ein automatisches Zentrieren ohne aufwändige Sensorik und Steuerung, die das Anheben in die Transport- bzw. Vorgewendestellung erfasst und den Aktor auslöst, zu erreichen, kann in vorteilhafter Weiterbildung der Erfindung der genannte Aktor eine Vorspannvorrichtung zum Vorspannen der Unterlenkeranlenkpunkte bilden und einen Kraftspeicher zum Aufbringen einer Vorspannkraft umfassen, die kleiner ist als eine Unterlenkerbetriebskraft, die im Arbeitsbetrieb die Unterlenkeranlenkpunkte von der Zentrierkontur des Anbaubocks wegtreibt. Durch eine solchermaßen abgestimmte Vorspannkraft kann einerseits ein Zentrieren beim Ausheben der Maschine erreicht und andererseits ein Freigeben der Beweglichkeit bzw. Einlenkbarkeit im abgesenkten Arbeitsbetrieb sichergestellt werden. Während im abgesenkten Arbeitsbetrieb der Fahrwiderstand des Anbaugeräts durch den bestimmungsgemäßen Boden- und/oder Ernteguteingriff der Arbeitsaggregate in den Unterlenkeranlenkpunkten bzw. dem Anbaubock ausreichend große Unterlenkerbetriebskräfte induzieren, die die Vorspannkraft des Aktors der Vorspannvorrichtung überwinden und die Unterlenkeranlenkpunkte von der Zentrierkontur wegtreiben und hierdurch für das Einlenken freigeben, fällt dieser Fahrtwiderstand und die hiervon induzierten Unterlenkerbetriebskräfte beim Anheben des Anbaugeräts in die Transport- bzw. Vorgewendestellung weg und die Vorspannkraft des Aktors kann die Unterlenkeranlenkpunkte aktiv gegen die Zentrierkontur treiben, sodass das Anbaugerät zentriert und spielfrei gehalten wird.

Insbesondere kann beim Anheben des Anbaugeräts in die Vorgewende- und/oder Transportstellung ein Zusammenspiel der genannten Vorspannkraft des Aktors mit den Reaktionskräften vorgesehen sein, die das Gewicht des Anbaugeräts beim Anheben induziert. Wenn das Anbaugerät in die Vorgewende- bzw. Transportstellung angehoben wird, kommt es in an sich bekannter Weise in den Ober- und Unterlenkern des Schleppers zu einer Zugkraft einerseits und Schubkräften andererseits, da das Gewicht des Anbaugeräts zu einem Kippmoment im Anbaubock führt, an dem das Anbaugerät einseitig auskragend aufgehängt ist. Insbesondere versucht die Gewichtskraft des Anbaugeräts bzw. das hiervon induzierte Drehmoment im Anbaubock den besagten Anbaubock im Bereich der Unterlenkeranlenkpunkte auf den Schlepper zu zu verschieben, sodass die beweglich am Anbaubock gelagerten Unterlenkeranlenkpunkte am Anbaubock zur schlepperabgewandten Seite des Anbaubocks verfahren - das heißt bei heckseitigem Anbau von hinten fahren und bei frontseitigem Anbau nach vorne fahren.

Vorteilhafterweise ist die Zentrier- und/oder Feststellvorrichtung derart ausgebildet, dass die Vorspannkraft des Aktors zumindest näherungsweise in dieselbe Richtung wirkt wie die vom Gewicht des Anbaugeräts beim Anheben induzierte Reaktionskraft bzw. die hiervon induzierte Verstellbewegung der Unterlenkeranlenkpunkte relativ zum Anbaubockkorpus. Hierdurch kann die Vorspannkraft des Aktors zusätzlich zur Gewichtskraft die Unterlenkeranlenkpunkte gegen die Zentrierkontur fahren und hierdurch die Zentrierung bewirken und das Anbaugerät in der zentrierten Stellung sicher halten, wenn das Anbaugerät in die Vorgewende- bzw. Transportstellung ausgehoben wird.

Bei heckseitigem Anbau kann der Aktor der Zentrier- und/oder Feststellvorrichtung derart ausgerichtet und/oder ausgebildet sein, dass die Vorspannkraft bzw. Stellkraft des Aktors die Unterlenkeranlenkpunkte relativ zum Anbaubockkorpus entgegen der Fahrtrichtung nach hinten gegen eine hinter den Unterlenkeranlenkpunkten vorgesehene Anlenkkontur schiebt bzw. zieht. Bei frontseitigem Anbau kann der Aktor dazu vorgesehen sein, die Unterlenkeranlenkpunkte nach vorne gegen eine dann vor den Unterlenkeranlenkpunkten positionierte Zentrierkontur zu schieben bzw. zu ziehen.

Für die genannte Vorspannung kann der Aktor und der genannte Kraftspeicher grundsätzlich verschieden ausgebildet sein, beispielsweise eine Federeinrichtung umfassen, die einerseits an den Unterlenkeranlenkpunkten und andererseits am Anbaubockkorpus angreift und die Unterlenkeranlenkpunkte gegen die Zentrierkontur zu treiben versucht.

In vorteilhafter Weiterbildung der Erfindung kann der Aktor aber auch einen Druckmittelzylinder umfassen und der Kraftspeicher ein Druckspeicher sein, der den Druckmittelzylinder mit Druckmittel beaufschlagt, um die gewünschte Vorspannkraft aufzubringen.

In vorteilhafter Weiterbildung der Erfindung kann der Kraftspeicher, insbesondere in Form des genannten Druckmittelspeichers, hinsichtlich seiner bereitgestellten Kraft bzw. des bereitgestellten Drucks einstellbar ausgebildet sein, um die Vorspannkraft in der gewünschten Weise an die Unterlenkerbetriebskräfte und/oder die Gewichtskraft des Anbaugeräts anpassen zu können. Je nach Rüstzustand des Anbaugeräts oder variierenden Bodeneigenschaften oder verschiedenen Betriebssituationen wie beispielsweise Verwendung in stark geneigten Hanglagen kann es vorteilhaft sein, die Vorspannkraft und damit die aktive Zentrierkraft des Aktors variabel einstellen zu können.

In vorteilhafter Weiterbildung der Erfindung sind die Unterlenkeranbaupunkte relativ zum Anbaubockkorpus etwa in Fahrtrichtung verschieblich gelagert, wobei der Aktor eine Stellkraft bereitstellen kann, die die Unterlenkeranlenkpunkte relativ zum Anbaubockkorpus in etwa parallel zur Fahrtrichtung verschiebt bzw. zu verschieben versucht und/oder den vom Fahrtwiderstand des Anbaugeräts im Arbeitsbetrieb induzierten Unterlenkerbetriebskräften entgegenwirkt.

Um eine stabile Kinematik zu erzielen, die einerseits das Einlenken des Anbaubocks gegenüber den Ober- und Unterlenkern des Schleppers ermöglicht, andererseits aber das Anbaugerät präzise führt und eine stabile Zentrierung ermöglicht, kann in vorteilhafter Weiterbildung der Erfindung vorgesehen sein, dass die Unterlenkeranbaupunkte gegenüberliegende Endabschnitte eines Anbaujochs bilden, das an dem Anbaubockkorpus um die aufrechte Lenkachse drehbar und in Fahrtrichtung verschiebbar gelagert ist. Das genannte Anbaujoch, das mit seinen gegenüberliegenden Unterlenkeranlenkpunkten mit den Unterlenkern des Schleppers verbunden werden kann, hat gegenüber dem Anbaubockkorpus vorteilhafterweise zwei Freiheitsgrade, nämlich einerseits einen rotatorischen Freiheitsgrad um die aufrechte Lenkachse und andererseits einen translatorischen Freiheitsgrad, der näherungsweise parallel zur Fahrtrichtung ist.

Das genannte Anbaujoch kann im Bereich der aufrechten Lenkachse in einem Langloch oder einer Längsführung verschieblich am Anbaubockkorpus geführt sein. Beispielsweise kann der Anbaubockkorpus ein Langloch aufweisen, in dem ein mit dem Anbaujoch verbundener Lenkachsbolzen verschieblich und drehbar geführt ist. Umgekehrt wäre es auch möglich, in dem Anbaujoch ein Langloch vorzusehen, in dem ein aufrechter Lenkachsbolzen aufgenommen ist, der am Anbaubockkorpus befestigt ist.

Um eine stabile Führung der Unterlenkeranlenkpunkte am Anbaubockkorpus bzw. - chassis zu erreichen, kann der Anbaubock zwei voneinander beabstandete, insbesondere parallele Führungsplatten umfassen, zwischen denen die Unterlenkeranlenkpunkte, insbesondere das vorgenannte Anbaujoch verschieblich und verdrehbar sandwichartig aufgenommen ist. Die genannten Platten verbindende Verbindungselemente, beispielsweise in Form von Verbindungsbolzen, können die Zentrierkontur bilden.

Der genannte Aktor kann vorteilhafterweise starr am Anbaubockkorpus befestigt und mit den Unterlenkeranlenkpunkten, insbesondere dem vorgenannten Anbaujoch gelenkig verbunden sein, um einerseits die translatorische Verschiebebewegung gegen die Zentrierkontur zu ermöglichen, andererseits aber im Arbeitsbetrieb die Einlenkbewegungen kompensieren zu können.

Vorteilhafterweise kann der zumindest eine Aktor etwa mittig zwischen den Unterlenkeranlenkpunkten an dem genannten Anbaujoch angreifen bzw. damit verbunden sein.

Um für längere Transportfahrten eine nochmals erhöhte Sicherheit gegen Ausbrechen aus der Zentrierstellung zu erzielen, kann der genannte Aktor vorteilhafterweise eine Sperrvorrichtung umfassen, die eine Verstellung des Aktors blockieren kann. Ist der Aktor als Druckmittelzylinder ausgebildet, kann die Sperrvorrichtung als Absperrvorrichtung ausgebildet sein und die Druckmittelzu- und/oder -abflüsse des Druckmittelaktors sperren.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Darstellung eines landwirtschaftlichen Anbaugeräts in Form eines Wendepflugs nach einer vorteilhaften Ausführung der Erfindung, wobei das Anbaugerät schräg von vorne gezeigt und der Anbaubock zum Anbau an einen nicht gezeigten Schlepper dargestellt ist,
- Fig. 2:: eine perspektivische Darstellung des Anbaubocks des landwirtschaftlichen Anbaugeräts aus Fig. 1, wobei das am Anbaubock längs verschieblich und um eine aufrechte Achse verdrehbare Anlenkjoch mit den Unterlenkeranlenkpunkten sowie der Aktor der Zentrier- und/oder Feststellvorrichtung gezeigt sind,
- Fig. 3:: eine Frontalansicht des Anbaubocks aus Fig. 2, die die dreh- und verschiebbare Führung des Anbaujochs zwischen zwei Anbaujochplatten sowie die Anordnung des Aktors zeigt, und
- Fig. 4:: eine Schnittansicht des Anbaubocks aus den vorhergehenden Figuren entlang der Linie A-A in Fig. 3, die die längs verschiebliche Aufnahme der aufrechten Lenkachse des Anbaujochs in einem Langloch im Anbaubockkorpus und die Verbindung des Aktors mit dem genannten Anbaujoch zeigt.

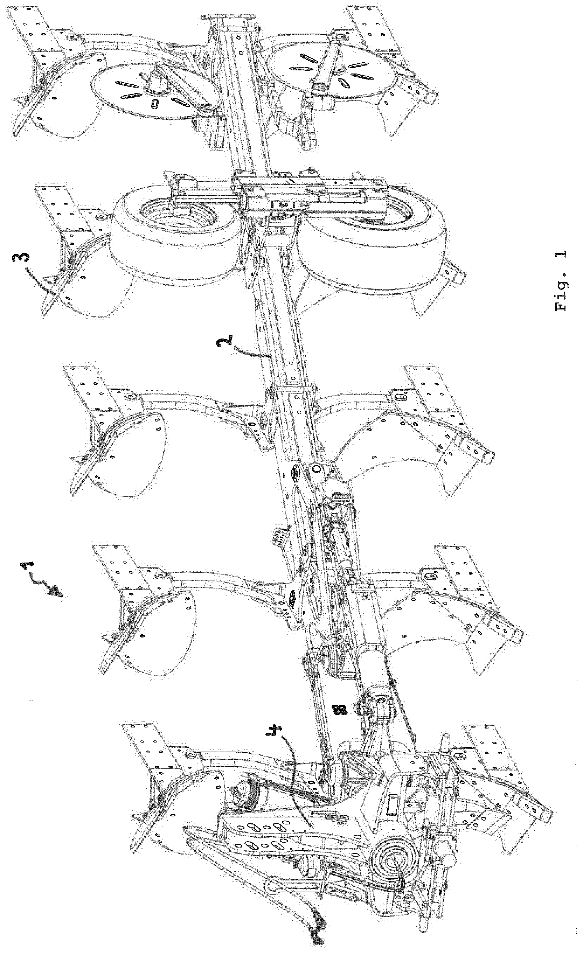

Wie Figur 1 zeigt, kann das landwirtschaftliche Anbaugerät in Form eines Anbaupflugs 1 ausgebildet sein, dessen Maschinenrahmen 2 als Arbeitsaggregate eine oder mehrere Reihen von Pflugscharen 3 trägt. Der Anbaupflug 1 kann dabei als Wendepflug ausgebildet sein, wobei der Maschinenrahmen 2 auf gegenüberliegenden Seiten angeordnete Pflugscharreihen trägt und um eine liegende, in Fahrtrichtung weisende Wendeachse gewendet werden kann, wie dies per se bekannt ist. Das landwirtschaftliche Anbaugerät kann aber auch in anderer Form ausgebildet sein, bspw. in Form eines anderen Bodenbearbeitungsgeräts wie Anbaugrubber, Anbauegge und/oder -kultivator, oder ggf. auch in Form eines Grünlandgeräts. Besonders vorteilhaft kann der zentrierende Anbaubock bei Anbaugeräten eingesetzt sein, die im Arbeitsbetrieb einen bestimmungsgemäß hohen Fahrtwiderstand entwickeln wie dies bei Bodenbearbeitunggeräten durch den Bodeneingriff der Werkzeuge bzw. Arbeitsaggregate der Fall ist, und zum Transport bzw. für das Vorgewende mittels des Anbaubocks ausgehoben werden.

Der Maschinenrahmen 2 ist dabei an einem Anbaubock 4 befestigt, der wiederum an einen nicht eigens gezeigten Schlepper angebaut werden kann. Der Maschinenrahmen 2 kann gegenüber dem Anbaubock 4 mehrachsig verstellbar sein. Neben der schon genannten Wendeachse kann der Maschinenrahmen 2 beispielsweise eine aufrechte Verstellachse zum Einstellen der Vorfurchenbreite und/oder der Schnittbreite aufweisen, wobei entsprechende Verstellantriebe zum Verstellen der Beweglichkeiten vorgesehen sein können.

Zusätzlich zu den genannten Verstellbarkeiten des Maschinenrahmens 2 gegenüber dem Anbaubock 4 ist eine weitere Beweglichkeit in den Anbaubock 4 integriert, die es dem Anbaugerät 1 im abgesenkten Arbeitsbetrieb erlaubt, gegenüber dem Schlepper einzulenken. Insbesondere kann der Anbaubock 4 selbst in der abgesenkten Arbeitsstellung gegenüber dem Schlepper um eine aufrechte Lenkachse 5 einlenken, beispielsweise um Hindernissen im Arbeitsbetrieb wie Telegrafenmasten, Bäumen oder Steinen ausweichen zu können, ohne hierfür die Arbeitsaggregate ausheben zu müssen oder Verspannungen zwischen dem Anbaugerät und dem Schlepper in Kauf nehmen zu müssen.

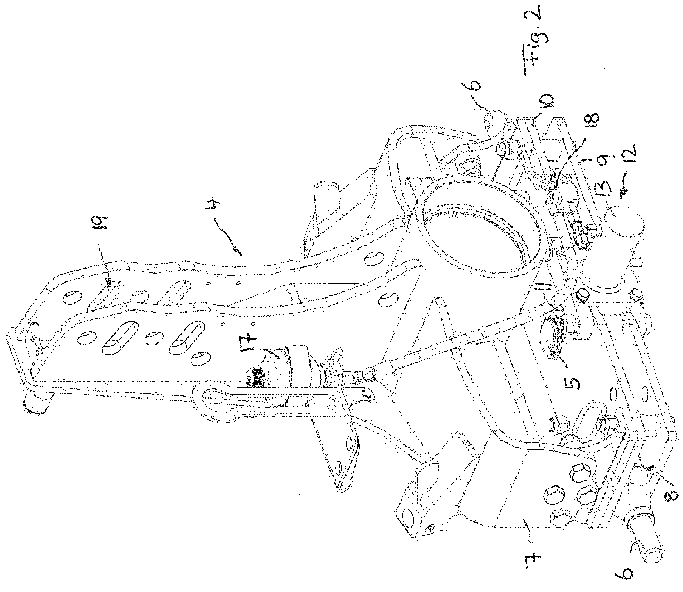

Die Beweglichkeit des Anbaubocks 4 kann durch eine Verschwenkbarkeit der Unterlenkeranlenkpunkte 6 gegenüber dem Anbaubockkorpus 7 erzielt werden. Wie die Figuren 2 bis 4 zeigen, können die Unterlenkeranlenkpunkte 6 von den gegenüberliegenden Endabschnitten eines Anbaujochs 8 gebildet sein, die in an sich bekannter Weise mit den Unterlenkern des Schleppers gekuppelt werden können. Das genannte Anbaujoch 8 und damit die Unterlenkeranlenkpunkte 6 ist an dem Korpus 6 des Anbaubocks 4 um die genannte aufrechte Lenkachse 5 verschwenkbar gelagert, sodass der Anbaubock 4 gegenüber dem Schlepper einlenken kann.

Zusätzlich ist das genannten Anbaujoch 8 näherungsweise fahrtrichtungsparallel verschieblich an dem Korpus 6 des Anbaubocks 4 gelagert, um die Einlenkbarkeit sperren oder alternativ freigeben zu können, wie noch erläutert wird.

Vorteilhafterweise kann das Anbaujoch 8 sandwichartig zwischen zwei Führungsplatten 9 und 10 verschieblich und verschwenkbar geführt sein, um trotz der Beweglichkeit eine stabile Aufhängung zu gewährleisten. Vorteilhafterweise kann an dem Anbaujoch 8 eine sich aufrecht erstreckende Lenkachse 5 vorgesehen sein, die in einer sich in Fahrtrichtung erstreckenden Längsführung beispielsweise in Form eines Langlochs 11 erstrecken kann, sodass das Anbaujoch 8 nicht nur um die aufrechte Lenkachse 5 verschwenken, sondern auch näherungsweise fahrtrichtungsparallel in dem Langloch 11 relativ zum Korpus 6 des Anbaubocks 4 verschoben werden kann.

Um den Anbaubock 4 und damit das daran aufgehängte Anbaugerät 1 beim Ausheben in die Vorgewende- bzw. Transportstellung verlässlich zu zentrieren und in der Zentrierstellung zu halten, umfasst eine Zentrier- und/oder Feststellvorrichtung 12 einen Aktor 13, der die Unterlenkeranlenkpunkte 6 gegen eine Zentrierkontur 14 des Anbaubocks 4 zu treiben versucht. Der genannte Aktor 13 kann vorteilhafterweise an einen Mittelabschnitt des Anbaujochs 8 angreifen bzw. damit verbunden sein, um das genannte Anbaujoch 8 in das Langloch 11 bzw. der vorgesehenen Längsführung zu verschieben. Um einen Winkelversatz beim Einlenken des Anbaubocks 4 und der entsprechenden Schwenkbewegung des Anbaujochs 8 zu kompensieren, kann der Aktor 13 mit dem Anbaujoch 8 durch eine gelenkige Verbindung 15 verbunden sein, die ein Abknicken des Anbaujochs 8 gegenüber dem Aktor 13 zulässt.

Der genannte Aktor 13 kann vorteilhafterweise ein Druckmittelzylinder beispielsweise in Form eines Hydraulikzylinders 16 sein, der von einem Kraftspeicher in Form eines Druckmittelspeichers 17 mit Druckmittel beaufschlagt wird, um eine Vorspannkraft auf das Anbaujoch 8 auszuüben.

Der Aktor 13 kann fest, insbesondere starr und unbeweglich, an den dem Korpus 7 des Anbaubocks 4, beispielsweise den genannten Führungsplatten 9 und 10 befestigt sein. Vorteilhafterweise kann auch der Druckmittelspeicher 17 am Anbaubock 4 montiert sein, um ein insgesamt autarkes System bereitzustellen, wobei jedoch auch andere Montageorte für den Druckmittelspeicher 17 möglich sind.

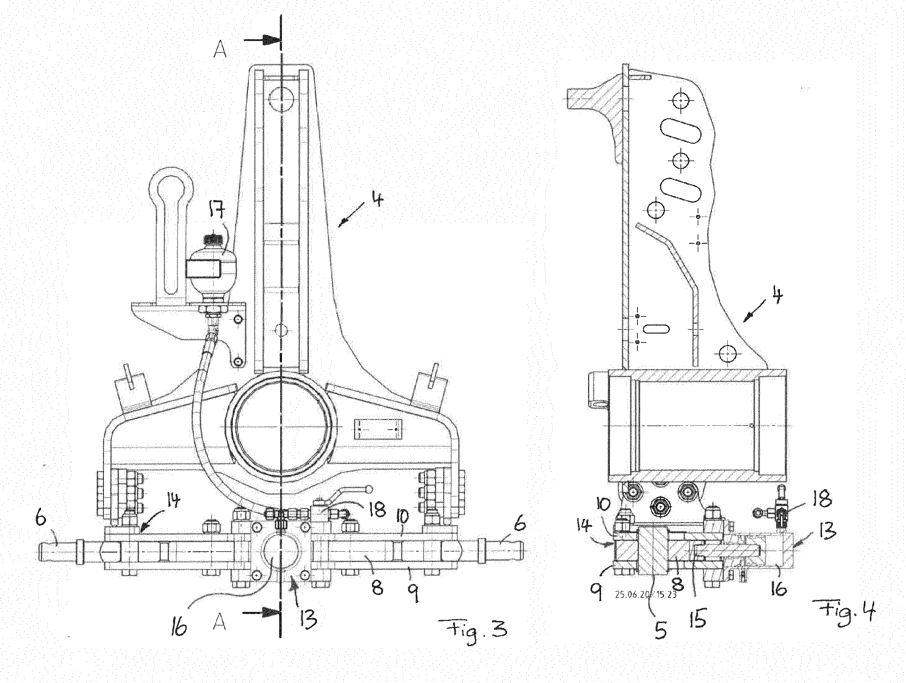

Wie Figur 2 und Figur 4 verdeutlichen, versucht die Stellkraft des Aktors 13 das Anbaujoch 8 vom Schlepper weg gegen die Zentrierkontur 14 zu verschieben, die am Anbaubock 4 auf der schlepperabgewandten Seite des Anbaujochs 8 vorgesehen ist, beispielsweise von den Verbindungsbolzen gebildet sein kann, die die Führungsplatten 9 und 10 zusammenhalten.

Vorteilhafterweise wirkt die Stellkraft des Aktors 13 gleichwirkend zu der Reaktionskraft, die beim Anheben des Anbaugeräts in die Vorgewende- bzw. Transportstellung im Anbaubock induziert wird, und/oder entgegengesetzt zu den im Arbeitsbetrieb wirkenden Unterlenkerbetriebskräften.

Im abgesenkten Arbeitsbetrieb wird der Anbaubock 4 durch den Fahrtwiderstand des Anbaugeräts 1, der im Wesentlichen durch den Eingriff der Pflugschare bestimmt wird, entgegen der Fahrtrichtung nach hinten gezogen, was dazu führt, dass das Anbaujoch 8 im Langloch 11 nach vorne läuft. An sich versucht der Aktor 13 dieser Bewegung entgegenzuwirken. Da aber die Vorspannkraft des Aktors 13 so eingestellt ist, dass die vom Fahrtwiderstand induzierten Unterlenkerbetriebskräfte im Arbeitsbetrieb größer sind, fährt das Anbaujoch 8 nach vorne, sodass sich die Unterlenkeranlenkpunkte 6 von der Zentrierkontur 14 lösen und die Beweglichkeit um die Lenkachse 5 freigegeben ist und der Anbaubock 4 gegenüber dem Schlepper einlenken kann.

Wird das Anbaugerät in die Vorgewende- bzw. Transportstellung ausgehoben, fallen die Fahrtwiderstandskräfte weg bzw. stark ab. Gleichzeitig induziert das einseitig am Anbaubock 4 aufgehängte Anbaugerät 1 bzw. dessen Gewichtskraft am Anbaubock 4 ein Drehmoment, das den Anbaubock 4 an dessen oberen Ende vom Schlepper weg zu drehen und/oder den unteren Endabschnitt des Anbaubocks auf den Schlepper zu verdrehen möchte. Hierdurch wird der Anbaubock 4 gegenüber den Unterlenkeranlenkpunkten 6, die an den Unterlenkern des Schleppers fixiert sind, verschoben, sodass die Unterlenkeranlenkpunkte 6 gegen die Zentrierkontur 14 fahren. Zusätzlich treibt auch die Stellkraft des Aktors 13 die Unterlenkeranlenkpunkte 6 gegen die Zentrierkontur 14, wodurch die Zentrierung spielfrei sichergestellt wird und die Zentrierkräfte nochmals erhöht werden.

Die als Vorspannvorrichtung ausgebildete Zentrier- und/oder Feststellvorrichtung 12 arbeitet somit automatisch in Abhängigkeit des Anhebens des Anbaugeräts 1 in die Vorgewende- bzw. Transportstellung. Der Fahrer des Schleppers kann es nicht mehr vergessen, das System zu zentrieren.

Um eine nochmals erhöhte Sicherheit gegen Herausbewegen aus der Zentrierstellung zu erzielen, kann eine Sperrvorrichtung 18 vorgesehen sein, die die Beweglichkeit des Aktors 13 sperren kann. Ist der Aktor 13 in der genannten Weise als Druckmittelzylinder 16 ausgebildet, kann die Sperrvorrichtung 18 eine Absperrvorrichtung sein, die einen Druckmittelablauf und/oder -zulauf sperren kann.

## Patentansprüche

1. Landwirtschaftliches Anbaugerät in Form eines Anbaupflugs, mit einem Anbaubock (4), der Unter- und Oberlenkeranlenkpunkte (6; 19) zum Dreipunktanbau an einen Schlepper umfasst, wobei die Unterlenkeranlenkpunkte (6) am Anbaubockkorpus um eine aufrechte Lenkachse (5) zum Einlenken des Anbaubocks (4) gegenüber dem Schlepper im Arbeitsbetrieb schwenkbar gelagert sind und eine Zentrier- und/oder Feststellvorrichtung (12) zum Zentrieren und/oder Feststellen der Unterlenkeranlenkpunkte (6) bezüglich der Lenkachse (5) im Transport- und/oder Vorgewendebetrieb vorgesehen ist, **dadurch gekennzeichnet, dass** die Zentrier- und/oder Feststellvorrichtung (12) einen Aktor (13) zum Verstellen der Unterlenkeranlenkpunkte (6) gegen eine Zentrierkontur (14) des Anbaubocks (4) aufweist und automatisch arbeitend in Abhängigkeit des Aushebens des Anbaugeräts in die Transport- und/oder Vorgewendestellung ausgebildet ist derart, dass die Unterlenkeranlenkpunkte (6) beim Anheben gegen die Zentrierkontur (14) fahren und im Arbeitsbetrieb freigegeben sind.

2. Landwirtschaftliches Anbaugerät nach dem vorhergehenden Anspruch, wobei der Aktor (13) eine Vorspannvorrichtung zum Vorspannen der Unterlenkeranlenkpunkte (6) zur Zentrierkontur (14) hin bildet und einen Kraftspeicher zum Aufbringen einer Vorspannkraft vorgesehen ist, die kleiner ist als eine Unterlenkerbetriebskraft, die im Arbeitsbetrieb die Unterlenkeranlenkpunkte (6) von der Zentrierkontur (14) wegtreibt.

3. Landwirtschaftliches Anbaugerät nach dem vorhergehenden Anspruch, wobei der Aktor (13) einen Druckmittelzylinder (16) umfasst und der Kraftspeicher einen Druckspeicher (17) zum Beaufschlagen des Druckmittelzylinders (16) mit Druckmittel umfasst.

4. Landwirtschaftliches Anbaugerät nach einem der vorhergehenden Ansprüche, wobei die Unterlenkeranlenkpunkte (6) relativ zum Anbaubockkorpus (7) etwa in Fahrtrichtung verschieblich gelagert sind und der Aktor (13) eine Stellkraft bereitstellt, die die Unterlenkeranlenkpunkte (6) gegenüber dem Anbaubocckorpus (7) in Fahrtrichtung betrachtet nach hinten zu treiben versucht und/oder den im Arbeitsbetrieb auf den Anbaubock (4) wirkenden Fahrtwiderstandskräften des Anbaugeräts entgegenwirkt.

5. Landwirtschaftliches Anbaugerät nach einem der vorhergehenden Ansprüche, wobei die Unterlenkeranlenkpunkte (6) gegenüberliegende Endabschnitte eines Anbaujochs (8) bilden, das an dem Anbaubockkorpus (7) um die aufrechte Lenkachse (5) drehbar und in Fahrtrichtung verschiebbar gelagert ist.

6. Landwirtschaftliches Anbaugerät nach dem vorhergehenden Anspruch, wobei das Anbaujoch (8) in einer Längsführung, vorzugsweise einem Langloch (11), in Fahrtrichtung verschiebbar an dem Anbaubockkorpus 7 geführt ist.

7. Landwirtschaftliches Anbaugerät nach einem der beiden vorhergehenden Ansprüche, wobei der Aktor (13) mit einem Mittelabschnitt des Anbaujochs (8) um die Lenkachse (5) herum verbunden ist.

8. Landwirtschaftliches Anbaugerät nach einem der vorhergehenden Ansprüche, wobei der Aktor (13) mit den Unterlenkeranlenkpunkten (6) gelenkig verbunden ist und/oder starr am Anbaubockkorpus (7) befestigt ist.

9. Landwirtschaftliches Anbaugerät nach einem der vorhergehenden Ansprüche, wobei die Zentrierkontur (14) zwei Anschlagskonturen umfasst, die von der Lenkachse (5) zu gegenüberliegenden Seiten hin beabstandet angeordnet und jeweils mit einem der Unterlenkeranlenkpunkte (6) in Eingriff bringbar sind.

10. Landwirtschaftliches Anbaugerät nach dem vorhergehenden Anspruch, wobei die Zentrierkontur (14) in Fahrtrichtung hinter den Unterlenkeranlenkpunkten (6) angeordnet ist.

11. Landwirtschaftliches Anbaugerät nach einem der vorhergehenden Ansprüche, wobei dem Aktor (13) eine Sperrvorrichtung (18) zum Blockieren der Beweglichkeit des Aktors (13) zugeordnet ist.

12. Landwirtschaftliches Anbaugerät nach einem der vorhergehenden Ansprüche, wobei der Aktor (13) sensor- und steuerungslos selbstbetätigend ausgebildet ist.

## Claims

1. Agricultural implement in the form of a mounted tractor plough, with a headstock (4), which comprises lower and upper link articulation points (6; 19) for three-point attachment to a tractor, wherein the lower link articulation points (6) on the headstock body are mounted pivotally about an upright steering axis (5) for steering the headstock (4) relative to the tractor in working operation and a centring and/or locking device (12) is provided for centring and/or locking the lower link articulation points (6) with respect to the steering axis (5) in transport and/or headland operation, **characterised in that** the centring and/or locking device (12) has an actuator (13) for adjusting the lower link articulation points (6) towards a centring contour (14) of the headstock (4) and, working automatically depending on the raising of the implement into the transport and/or headland position, is configured such that the lower link articulation points (6) move towards the centring contour (14) upon raising and are released in working operation.

2. Agricultural implement according to the preceding claim, wherein the actuator (13) forms a preloading device for preloading the lower link articulation points (6) towards the centring contour (14) and an energy store is provided for applying a preloading force, which is smaller than a lower link operating force, which in working operation drives the lower link articulation points (6) away from the centring contour (14).

3. Agricultural implement according to the preceding claim, wherein the actuator (13) comprises a pressure medium cylinder (16) and the energy store comprises a pressure accumulator (17) for acting upon the pressure medium cylinder (16) with pressure medium.

4. Agricultural implement according to any one of the preceding claims, wherein the lower link articulation points (6) are supported displaceably relative to the headstock body (7) approximately in the direction of travel and the actuator (13) provides an actuating force, which attempts to drive the lower link articulation points (6) backwards with respect to the headstock body (7) seen in the direction of travel and/or counteracts the travel resistance forces of the implement acting on the headstock (4) in working operation.

5. Agricultural implement according to any one of the preceding claims, wherein the lower link articulation points (6) form opposing end sections of a mounted yoke (8), which is supported rotatably on the headstock body (7) about the upright steering axis (5) and displaceably in the direction of travel.

6. Agricultural implement according to the preceding claim, wherein the mounted yoke (8) is guided displaceably in a longitudinal guide, preferably an elongated hole (11), in the direction of travel on the headstock body (7).

7. Agricultural implement according to one of the two preceding claims, wherein the actuator (13) is connected to a central section of the mounted yoke (8) about the steering axis (5).

8. Agricultural implement according to any one of the preceding claims, wherein the actuator (13) is connected articulatedly to the lower link articulation points (6) and/or is attached fixedly to the headstock body (7).

9. Agricultural implement according to any one of the preceding claims, wherein the centring contour (14) comprises two stop contours, which are arranged spaced from the steering axis (5) towards opposing sides and can be brought respectively into engagement with one of the lower link articulation points (6).

10. Agricultural implement according to the preceding claim, wherein the centring contour (14) is arranged in the direction of travel behind the lower link articulation points (6).

11. Agricultural implement according to any one of the preceding claims, wherein associated with the actuator (13) is a locking device (18) for blocking the mobility of the actuator (13).

12. Agricultural implement according to any one of the preceding claims, wherein the actuator (13) is configured to operate automatically without sensors and without control.

## Revendications

1. Outil agricole porté sous la forme d'une charrue portée, doté d'une tête d'attelage (4) qui comprend des points d'articulation de bras inférieur et de bras supérieur (6 ; 19) pour l'attelage à trois points sur un tracteur, les points d'articulation de bras inférieur (6) étant montés sur le corps de tête d'attelage de manière pivotante autour d'un axe de direction (5) vertical destiné à la rotation de la tête d'attelage (4) par rapport au tracteur en mode de travail et un dispositif de centrage et/ou de blocage (12) pour le centrage et/ou le blocage des points d'articulation de bras inférieur (6) par rapport à l'axe de direction (5) dans le mode de transport et/ou de tournière étant prévu, **caractérisé en ce que** le dispositif de centrage et/ou de blocage (12) présente un actionneur (13) destiné à déplacer les points d'articulation de bras inférieur (6) contre un contour de centrage (14) de la tête d'attelage (4) et est réalisé de manière à fonctionner automatiquement en fonction du déport de l'outil porté dans la position de transport et/ou de tournière de telle manière que les points d'articulation de bras inférieur (6) viennent contre le contour de centrage (14) lors du levage et sont débloqués en mode de travail.

2. Outil agricole porté selon la revendication précédente, dans lequel l'actionneur (13) forme un dispositif de précontrainte pour la précontrainte des points d'articulation de bras inférieur (6) en direction du contour de centrage (14) et un accumulateur d'énergie est prévu pour appliquer une force de précontrainte qui est inférieure à une force motrice de bras inférieur, qui, en mode de travail, écarte les points d'articulation de bras inférieur (6) du contour de centrage (14).

3. Outil agricole porté selon la revendication précédente, dans lequel l'actionneur (13) comprend un vérin à fluide sous pression (16) et l'accumulateur d'énergie comprend un accumulateur hydraulique (17) pour soumettre le vérin à fluide sous pression (16) à l'action d'un fluide sous pression.

4. Outil agricole porté selon l'une des revendications précédentes, dans lequel les points d'articulation de bras inférieur (6) sont montés mobiles approximativement dans le sens de la marche par rapport au corps de tête d'attelage (7) et l'actionneur (13) fournit une puissance de réglage qui tente d'entraîner les points d'articulation de bras inférieur (6) vers l'arrière, vu dans le sens de la marche, par rapport au corps de tête d'attelage (7) et/ou qui agit en sens contraire des forces de résistance à la marche de l'outil porté agissant sur la tête d'attelage (4) en mode de travail.

5. Outil agricole porté selon l'une des revendications précédentes, dans lequel les points d'articulation de bras inférieur (6) forment des parties d'extrémité opposées d'un joug porté (8) qui est monté sur le corps de tête d'attelage (7) de manière rotative autour de l'axe de direction (5) vertical et coulissant dans le sens de la marche.

6. Outil agricole porté selon la revendication précédente, dans lequel le joug porté (8) est guidé sur le corps de tête d'attelage (7) dans un guidage longitudinal, de préférence un trou oblong (11), de manière coulissante dans le sens de la marche.

7. Outil agricole porté selon l'une des deux revendications précédentes, dans lequel l'actionneur (13) est relié à une partie centrale du joug porté (8) autour de l'axe de direction (5).

8. Outil agricole porté selon l'une des revendications précédentes, dans lequel l'actionneur (13) est relié de manière articulée aux points d'articulation de bras inférieur (6) et/ou est fixé de manière rigide sur le corps de tête d'attelage (7).

9. Outil agricole porté selon l'une des revendications précédentes, dans lequel le contour de centrage (14) comprend deux contours de butée qui sont disposés espacés depuis l'axe de direction (5) vers des côtés opposés et qui peuvent respectivement être amenés en prise avec un des points d'articulation de bras inférieur (6).

10. Outil agricole porté selon la revendication précédente, dans lequel le contour de centrage (14) est disposé derrière les points d'articulation de bras inférieur (6) dans le sens de la marche.

11. Outil agricole porté selon l'une des revendications précédentes, dans lequel un dispositif de blocage (18) est associé à l'actionneur (13) pour bloquer la mobilité de l'actionneur (13).

12. Outil agricole porté selon l'une des revendications précédentes, dans lequel l'actionneur (13) est réalisé à actionnement indépendant sans capteur et sans commande.
